Europäisches Patentamt

European Patent Office

Office européen des brevets

(11) Veröffentlichungsnummer: **0 277 560**
**A1**

(12) **EUROPÄISCHE PATENTANMELDUNG**

(21) Anmeldenummer: **88100916.1**

(22) Anmeldetag: **22.01.88**

(51) Int. Cl.⁴: **G08B 13/16** , G01H 1/00

(30) Priorität: **26.01.87 DE 3702196**

(43) Veröffentlichungstag der Anmeldung:
**10.08.88 Patentblatt 88/32**

(84) Benannte Vertragsstaaten:
**AT BE CH DE ES FR GB IT LI NL SE**

(71) Anmelder: **Licentia Patent-Verwaltungs-GmbH**
**Theodor-Stern-Kai 1**
**D-6000 Frankfurt/Main 70(DE)**

(72) Erfinder: **Miklos, Hans-Günther, Dipl.-Ing.**
**Sandstücken 11**
**D-2081 Hetlingen(DE)**
Erfinder: **Sawusch, Klaus, Dipl.-Ing.**
**Westpreussenring 17a**
**D-2400 Lübeck 14(DE)**

(74) Vertreter: **Lertes, Kurt, Dr. et al**
**Licentia Patent-Verwaltungs-GmbH**
**Theodor-Stern-Kai 1**
**D-6000 Frankfurt/M 70(DE)**

(54) Verfahren zur unverzüglichen Feststellung von unerwünschten beschädigenden Manipulationen an einem Gegenstand.

(57) Verfahren zur unverzüglichen Feststellung von unerwünschten beschädigenden Manipulationen an einem Gegenstand, vorzugsweise einem Hochspannungsmast (1), unter Verwendung von mindestens einem Sensor (2) und einer Auswerteeinrichtung (3). Eine wirkungsvolle und technisch einfache Feststellung derartiger Manipulationen wird dadurch ermöglicht, daß aufgrund von an dem Gegenstand auftretenden nicht betriebsbedingten Geräuschen mit Hilfe des an dem Gegenstand angeordneten Sensors und der Auswerteeinrichtung ein Meldesignal erzeugt wird. Das Meldesignal kann beispielsweise per Selektivruf über das EVU-eigene Funknetz zur Zentrale (6) eines Energieversorgungsunternehmens (EVU) geleitet werden, wo es überprüft und gegebenenfalls eine Gegenmaßnahme eingeleitet wird.

FIG.1

"Verfahren zur unverzüglichen Feststellung von unerwünschten beschädigenden Manipulationen an einem Gegenstand"

Die Erfindung betrifft ein Verfahren gemäß dem Oberbegriff von Anspruch 1 und eine Vorrichtung zur Durchführung des Verfahrens.

Vorzugsweise an öffentlichen Gegenständen und Einrichtungen vorkommende Zerstörungs-und Beschädigungshandlungen, wie z.B. das Ansägen und Umkippen von Hochspannungsmasten, machen es erforderlich, diese Gegenstände gegen derartige Handlungen zu schützen. Wegen der Vielzahl dieser Gegenstände steht zunächst einmal eine Überwachung der Gegenstände im Vordergrund. Bekannt sind beispielsweise Fernsehanlagen, deren FS-Kameras von den zu überwachenden Gegenständen laufend Fernsehbilder an Bildschirme liefern, die in sogenannten Meldezentralen angeordnet sind. Dort werden die Bildschirme dauernd von Personen beobachtet. Denkbar ist auch, diese Fernsehanlagen derart zu automatisieren, daß -unabhängig von Beobachtern - die Anlagen bei der Annäherung von unbefugten Personen an die Gegenstände Alarmsignale auslösen. Von Nachteil ist, daß diese Anlagen technisch sehr aufwendig sind, und daß die Fernsehkameras selbst Gegenstand von Zerstörungs-bzw. Beschädigungshandlungen sein können.

Der Erfindung liegt daher die Aufgabe zugrunde, ein Verfahren bzw. eine Vorrichtung der eingangs genannten Art zu schaffen, mit dem bzw. mit der eine wirkungsvolle und technisch einfache Feststellung von unerwünschten beschädigenden bzw. zerstörenden Manipulationen ermöglicht wird.

Die Aufgabe wird erfindungsgemäß durch die kennzeichnenden Verfahrensmerkmale von Anspruch 1 gelöst.

Ausgestaltungen des erfindungsgemäßen Verfahrens sind in den Ansprüchen 2 und 3 beschrieben.

Vorrichtungen zur Durchführung des Verfahrens sind in den Unteransprüchen 4 bis 11 beansprucht.

Vorteilhafterweise können die an den Gegenständen befestigten Sensoren so ausgebildet werden, daß sie selbst den Zerstörungsund Beschädigungshandlungen weitgehend widerstehen. Von Vorteil ist auch, daß gegebenenfalls erforderliche Gegenmaßnahmen in verhältnismäßig kurzer Zeit eingeleitet werden können, da das allerorts vorhandene Funknetz als Hilfsmittel dient.

In der Zeichnung ist ein Ausführungsbeispiel nach der Erfindung beschrieben, und zwar zeigt:

Fig. 1 eine ein Funknetz verwendende Gesamtanordnung, und

Fig. 2 eine Auswerteeinrichtung für vier Sensoren.

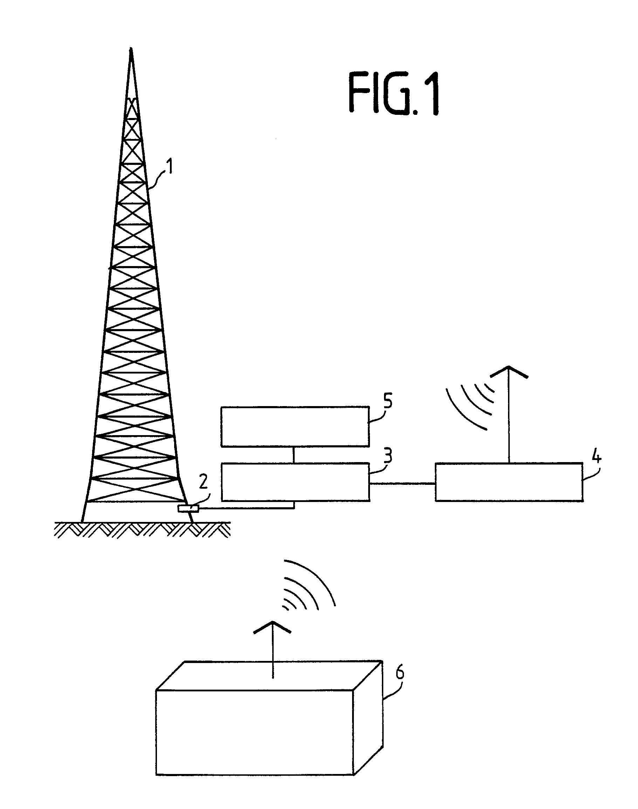

Figur 1 zeigt einen Hochspannungsmast 1, der gegen unerwünschte Zerstörung bzw. Beschädigung geschützt werden soll. An dem Mast 1 ist ein Sensor 2 befestigt, dem eine eigene Auswerteeinrichtung 3 und eine Sendeeinrichtung 4 nachgeordnet sind. Alle diese Einrichtungen kömmen von einem Solargenerator 5 mit zeichnerisch nicht dargestellter Pufferbatterie und Spannungsregeleinrichtung mit elektrischer Energie versorgt werden. Die von der Sendeeinrichtung 4 abgegebenen Funk-Meldesignale werden von der mit 6 bezeichneten Zentrale eines Energieversorgungsunternehmens empfangen. Eine- unverzügliche Feststellung von unerwünschten beschädigenden Manipulationen an dem Hochspannungsmast 1 erfolgt dadurch, daß aufgrund von an dem Mast 1 auftretenden nicht betriebsbedingten Geräuschen mit Hilfe des Sensors 2 und der dem Sensor 2 nachgeschalteten Auswerteeinrichtung 3 ein Meldesignal erzeugt wird. Das Meldesignal wird per Selektivruf über das EVU-eigene Funknetz zur Zentrale 6 des Energieversorgungsunternehmens geleitet, wo es überprüft wird und wo gegebenenfalls eine Gegenmaßnahme eingeleitet wird. Vor der Einleitung von Gegenmaßnahmen ist es zweckmäßig, von der EVU-Zentrale 6 über den Funkweg eine akustische Identifizierung (Mithöreffekt des Sensors) zur Unterscheidung eines Alarmes von einem Fehlalarm durchzuführen. Die akustische Identifizierung ermöglicht vorteilhafterweise die entscheidende Unterscheidung zwischen unerwünschten beschädigenden Manipulationen und den zufälligen durch die Umwelt bedingten Störungen.

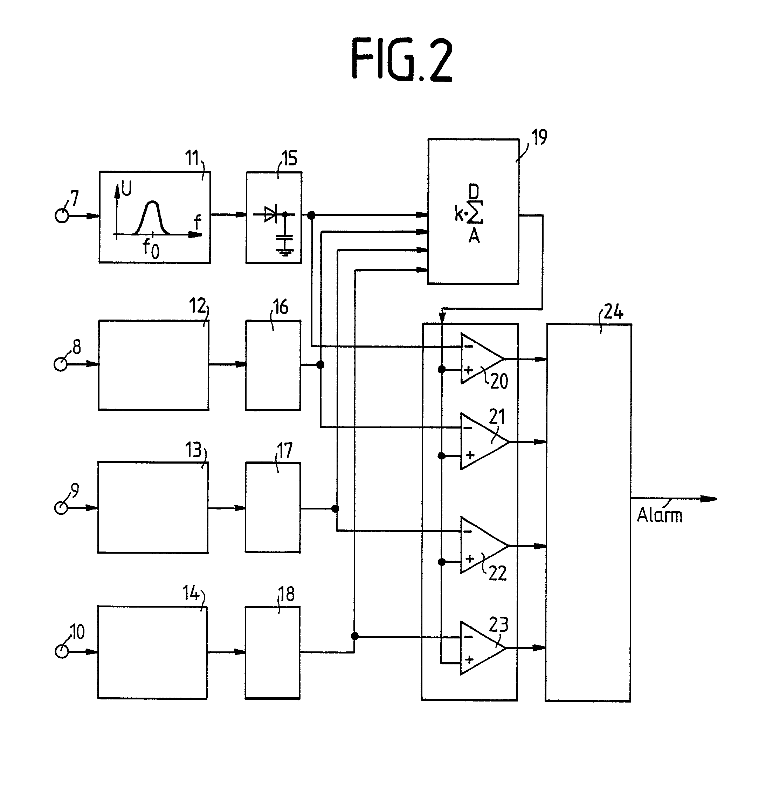

Die aus Figur 2 ersichtliche Auswerteeinrichtung weist vier Eingangszweige auf, die jeweils aus einem Filterglied 11, 12, 13 oder 14 mit jeweils einem nachgeordneten Gleichrichter 15, 16, 17 oder 18 bestehen. An jeden Eingangszweig ist ein Sensor 7, 8, 9 oder 10 angeschlossen, bei denen es sich um Körperschallsensoren handeln kann und die jeweils an einem Fuß eines vierfüßigen Hochspannungsmastes mechanisch befestigt sind. Aus den Ausgangssignalen der Sensoren 7 bis 10 filtern die Filterglieder 11 bis 14 jeweils dasjenige Frequenzbandsignal heraus, das einer gewünschten Manipulation (z.B. Sägen an einem Fuß des Mastes) entspricht. Durch Umwelteinflüsse hervorgerufene Signale, die praktisch auf alle vier Füße des Mastes gleichzeitig und in gleicher Stärke einwirken, werden durch die Filterglieder 11 bis 14 unterdrückt oder für den Fall, daß sie innerhalb der durch die Manipulationen hervorgerufenen Frequenzbereiche liegen, durch die Auswerteeinrichtung eliminiert.

Die Ausgänge der Gleichrichter 15 bis 18 sind zum einen an einen von vier Eingängen eines Analog-Addierers 19, der eine Einrichtung zur Einstellung eines positiven oder negativen Verstärkungsfaktors (k) aufweisen kann, und zum anderen an den negativen Eingang von vier Komperatoren 20 bis 23, vorzugsweise Operationsverstärkern, angeschlossen. Der Ausgang des Analog-Addierers 19 steht mit den positiven Eingängen der Komperatoren 20 bis 23 in elektrisch leitender Verbindung, wobei den Ausgängen der Komperatoren 20 bis 23 ein Korrelator 24 zur Bewertung der digitalen, von den Komperatoren 20 bis 23 bereitgestellten Ausgangssignale und zur Abgabe eines Meldesignals nachgeordnet ist. Hierbei kann eine Bewertung der digitalen Ausgangssignale nach ihrer Anzahl pro Zeiteinheit, d.h. nach Häufigkeitskriterien erfolgen. Neben der Übertragung des Meldesignals an eine EVU-Zentrale mittels eines Funktnetzes ist auch eine Übertragung über eine elektrische Leitung möglich.

Mit der in Fig. 2 dargestellten Auswerteeinrichtung ist eine Alarmmeldung für eine Manipulation, die an bis zu drei Füßen des Hochspannungsmastes gleichzeitig vorgenommen wird, sichergestellt, da zum einen Umwelteinflüsse eliminiert werden und zum anderen die gleichgerichteten Frequenzbandsignale einer Summenbildung und anschließend einer Differenzbildung zwischen dem Summensignal der Frequenzbandsignale mit jedem einzelnen Frequenzbandsignal unterzogen werden.

## Ansprüche

Verfahren zur unverzüglichen Feststellung von unerwünschten beschädigenden Manipulationen an einem Gegenstand, vorzugsweise einem Hochspannungsmast, unter Verwendung von mindestens einem Sensor und einer Auswerteeinrichtung, dadurch gekennzeichnet, daß aufgrund von an dem Gegenstand (1) auftretenden nicht betriebsbedingten Geräuschen mit Hilfe des an dem Gegenstand angeordneten Sensors (2) und einer dem Sensor (2) nachgeschalteten Auswerteeinrichtung (3) ein Meldesignal erzeugt wird.

2. Verfahren nach Anspruch 1, dadurch gekennzeichnet, daß das Meldesignal per Selektivruf über das EVU-eigene Funknetz zur Zentrale (6) des Energieversorgungsunternehmens (EVU) geleitet wird, und daß in der EVU-Zentrale (6) das Meldesignal überprüft und gegebenenfalls eine Gegenmaßnahme eingeleitet wird.

3. Verfahren nach Anspruch 2, dadurch gekennzeichnet, daß von der EVU-Zentrale (6) über den Funkweg eine akustische Identifizierung (Mithöreffekt des Sensors) zur Unterscheidung eines Alarmes von einem Fehlalarm durchgeführt wird.

4. Vorrichtung zur Durchführung des Verfahrens nach Anspruch 1, 2 oder 3, dadurch gekennzeichnet, daß dem an dem Gegenstand (1) befestigten Sensor (2) und der zugehörenden Auswerteinrichtung (3) eine Sendeeinrichtung (4) nachgeordnet ist, die über das EVU-eigene Funknetz mit der EVU-Zentrale (6) in Funkverbindung steht.

5. Vorrichtung nach Anspruch 4, gekennzeichnet durch einen Solargenerator (5) mit nachgeordneter Pufferbatterie und Spannungsregeleinrichtung zur Energieversorgung des Sensors (2), der Auswerteeinrichtung und der Sendeeinrichtung (4).

6. Vorrichtung zur Durchführung des Verfahrens nach Anspruch 1, vorzugsweise unter Verwendung des Verfahrens nach Anspruch 2 oder 3 bzw. der Vorrichtungen nach Anspruch 4 oder 5, dadurch gekennzeichnet, daß als Gegenstand ein Hochspannungsmast (1) mit vier Füßen vorgesehen ist, an denen jeweils ein Sensor (7, 8, 9, 10) befestigt ist, und daß den Sensoren (7, 8, 9, 10) eine gemeinsame Auswerteeinrichtung nachgeordnet ist.

7. Vorrichtung nach Anspruch 6, dadurch gekennzeichnet, daß die Auswerteeinrichtung vier Eingangszweige aufweist, an die jeweils ein Sensor (7, 8, 9, 10) angeschlossen ist und die aus jeweils einem Filterglied (11, 12, 13, 14) mit jeweils einem nachgeordneten Gleichrichter (15, 16, 17, 18) bestehen, daß die Ausgänge der Gleichrichter (15, 16, 17, 18) an jeweils einen von vier Eingängen eines Analog-Addierers (19) und an den negativen Eingang von vier Komperatoren (20, 21, 22, 23) angeschlossen sind, daß mit den positiven Eingängen der Komperatoren (20, 21, 22, 23) der Ausgang des Analog-Addierers (29) elektrisch leitend verbunden ist, und daß den Ausgängen der Komperatoren (20, 21, 22, 23) ein Korrelator (24) zur Bewertung der digitalen Ausgangssignale der Komperatoren (20, 21, 22, 23) und zur Abgabe eines Meldesignales nachgeschaltet ist.

8. Vorrichtung nach Anspruch 7, dadurch gekennzeichnet, daß der Analog-Addierer (19) eine Einrichtung zur Einstellung eines positiven oder negativen Verstärkungsfaktor (k) aufweist.

9. Vorrichtung nach Anspruch 7, gekennzeichnet durch die Verwendung von Operationsverstärkern (20, 21, 22, 23).

10. Vorrichtung nach Anspruch 7 oder 9, dadurch gekennzeichnet, daß der Korrelator (24) eine Bewertung der digitalen Ausgangssignale der Komperatoren (20, 21, 22, 23) nach ihrer Anzahl pro Zeiteinheit (Häufigkeitskriterium) durchführt.

11. Vorrichtung nach Anspruch 6, 7 oder 10, dadurch gekennzeichnet, daß eine Übertragung des Meldesignals über eine elektrische Leitung zu der EVU-Zentrale erfolgt.

# FIG.1

# FIG.2

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 125 981  (G. GRIMM) * Insgesamt * | 1,2,4,6 -9 | G 08 B  13/16 G 01 H  1/00 |
| Y |  | 5,11 | |
| A |  | 10 | |
|  | --- | | |
| X | DE-A-3 204 698  (G. GRIMM) * Insgesamt * | 1-4 | |
| A |  | 7-10 | |
|  | --- | | |
| Y | GB-A-1 416 346  (EMI LTD) * Ingesamt * | 11 | |
| A |  | 1,2,4,7 | |
|  | --- | | |
| P,X | DE-U-8 705 963  (ROBERT BOSCH) * Insgesamt * | 1-6 | |
| Y | US-A-4 153 881  (PERMUT et al.) * Spalte 7, Zeilen 31-36 * | 5 | |
|  | ----- | | |

**RECHERCHIERTE SACHGEBIETE (Int. Cl.4)**

G 08 B
G 01 H

Der vorliegende Recherchenbericht wurde für alle Patentansprüche erstellt

| Recherchenort | Abschlußdatum der Recherche | Prüfer |
|---|---|---|
| DEN HAAG | 04-05-1988 | REEKMANS M.V. |

KATEGORIE DER GENANNTEN DOKUMENTE

X : von besonderer Bedeutung allein betrachtet
Y : von besonderer Bedeutung in Verbindung mit einer
      anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
      nach dem Anmeldedatum veröffentlicht worden ist
D : in der Anmeldung angeführtes Dokument
L : aus andern Gründen angeführtes Dokument
...........................................................................
& : Mitglied der gleichen Patentfamilie, übereinstimmendes
      Dokument

EPO FORM 1503 03.82 (P0403)